Europäisches Patentamt

European Patent Office

Office européen des brevets

(19)

(11) EP 0 780 594 A1

(12) DEMANDE DE BREVET EUROPEEN

(43) Date de publication:
25.06.1997 Bulletin 1997/26

(51) Int Cl.⁶: F16G 1/00

(21) Numéro de dépôt: 96402712.2

(22) Date de dépôt: 12.12.1996

(84) Etats contractants désignés:
BE CH DE FR GB IT LI NL

(30) Priorité: 21.12.1995 FR 9515245

(71) Demandeur: ELF ATOCHEM S.A.
92800 Puteaux (FR)

(72) Inventeurs:
• Alex, Patrick
91470 Limours Pecqueuse (FR)
• Jamamoto, Jun
Edogawa-ku, Tokyo, Post NO 133 (JP)

(74) Mandataire: Neel, Henry et al
Elf Atochem S.A.,
Dept. Propriété Industrielle,
La Défense 10,
Cedex 42
92091 Paris La Défense (FR)

(54) Courroies antistatiques

(57) L'invention concerne des courroies en polymère thermoplastique (A) et comprenant une quantité suffisante d'un polymère (B) pour les rendre antistatiques, ledit polymère (B) comprenant des blocs polyéthylène glycol.

On utilise avantageusement des polymères (A) à blocs polyamide-6 (PA-6) ou polyamide-12 (PA-12) et blocs polytétraméthylène glycol et des polymères (B) à blocs PA-6 ou PA-12 et blocs polyéthylène glycol.

**Description**

La présente invention concerne des courroies antistatiques en particulier les courroies de transmission de puissance et les bandes transporteuses. Le frottement des courroies sur les poulies, les rouleaux d'entraînement ou les rouleaux à entraîner provoquent l'apparition d'électricité statique pouvant détériorer des mécanismes électroniques ou les objets transportés par la bande. La plupart des courroies en caoutchouc ou en polymère thermoplastique peuvent être rendues antistatiques par incorporation de noir de carbone, de plastifiants conducteurs et d'additifs tels les sels d'ammonium quaternaires ou les dérivés éthoxylés.

Ces produits migrent dans le polymère ou le caoutchouc et exsudent ce qui atténue ou supprime l'effet antistatique, quant au noir cette couleur est parfois inacceptable. On peut aussi disposer dans la courroie des fibres conductrices éventuellement sous forme tissée mais il faut utiliser des adhésifs, de plus leurs propriétés mécaniques sont parfois très différentes du matériau de la courroie, ce qui peut amener des ruptures ou des pertes de l'antistatisme.

La demanderesse a maintenant trouvé qu'on pouvait faire des courroies en polymère thermoplastique (A) comprenant un polymère (B) comprenant des blocs polyéthylène glycol en quantité suffisante pour les rendre antistatiques.

Au sens de l'invention, on entend par courroies aussi bien les courroies de transmission de puissance qui peuvent être plates, en "v", trapézoidales ou même de section circulaire que les bandes transporteuses. Les dites bandes transporteuses peuvent être aussi bien les bandes par exemple de 0,2 à 1,5 m de large pour le transport d'objets que les bandes de 1 à 5 cm de large pour la lecture de cartes ou de billets magnétiques.

Le polymère thermoplastique (A) est tout polymère ayant des caractéristiques mécaniques suffisantes pour faire une courroie, c'est-à-dire ayant une stabilité dimensionnelle aux faibles allongements tout en ayant une bonne contrainte à ces faibles allongements. De plus, il doit être peu sensible à l'humidité pour que ses propriétés mécaniques soient indépendantes de l'humidité ambiante. A titre d'exemple de polymère (A), on peut citer :

- les copolymères blocs styrène / butadiène / styrène (SBS) ;
- les copolymères blocs styrène / éthylène-butène / styrène (SEBS) ;
- les copolymères styrène / isoprène / styrène (SIS) ;
- les EPDM (éthylène propylène diène) ;
- les caoutchoucs éthylène propylène (EPR)
- les polyamides, les mélanges de polyamides et de polyoléfines à matrice polyamide ;
- les polyuréthannes élastomères (TPU) ;
- les polyéther esters élastomères
- les polymères à blocs polyamides et blocs polyéthers.

On entend par polyamide les produits de condensation :

- d'un ou plusieurs aminoacides, tels les acides aminocaproïques, amino-7-heptanoïque, amino-11-undécanoique et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

 ou des mélanges de certains de ces monomères ce qui conduit à des copolyamides.

On peut utiliser des mélanges de polyamide. On utilise avantageusement le PA-6 et le PA-6,6 et le PA 12.

S'agissant des mélanges de polyamide et de polyoléfines à matrice polyamide, on entend par polyoléfines des polymères comprenant des motifs oléfines tels que par exemple des motifs éthylène, propylène, butène-1, etc...

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.
On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.
L'agent compatibilisant est un produit connu en soi pour compatibiliser les polyamides et les polyoléfines.
On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.
La quantité de polyamide formant la matrice peut être comprise entre 55 et 95 parties pour 5 à 45 parties de polyoléfines.
La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces produits par mélange de polyamide, de polyoléfine et éventuellement de compatibilisant selon les techniques usuelles de mélange à l'état fondu (bi vis, Buss, monovis).
Les polyuréthannes élastomères résultent de l'enchaînement des trois motifs de base suivants :

1) un polyol linéaire à terminaisons OH de masse molaire par exemple 500 à 3 500. Les polyols peuvent être choisis, soit parmi les polyesters tels que les adipâtes, azelates, isophtalates et la polycaprolactone, soit parmi les polyéthers tels que le polypropylène glycol (PPG)
ou le polytétraméthylène glycol (PTMG)

2) un diisocyanate qui peut être aromatique tel que le diphénylméthane -4,4' diisocyanate (MDI), le toluène -2,4 diisocyanate (TDI) ou non aromatique tel que le dicyclohexylméthane -4,4'diisocyanate.

3) un glycol de bas poids moléculaire tel que le 1,4-butane diol, l'éthylène glycol ou le 1,4 phénylène-bis-$\beta$ hydroxy éthyl éther comme allongeur de chaîne.

Les enchaînements de (1) et (2) forment les segments souples du polyuréthane, les enchaînements de (1) et (3) forment les segments rigides.
Les polyéther esters comprennent des motifs :

1) acides dicarboxyliques tels que l'acide téréphtalique ou le 2,6-naphtalène dicarboxylique ;

2) polyétherdiols tels que le polypropylène glycol ou le polytétraméthylène glycol ;

3) un glycol de bas poids moléculaire tel que le 1,4 butanediol ou l'éthylène glycol.

Les enchaînements de (1) et (2) forment les segments souples du polyéther ester, les enchaînements de (1) et (3) en forment les segments rigides; Ces produits sont décrits dans les brevets EP 402 883 et EP 405 227.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en Polyamide 6.

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PPG ou blocs PTMG. Ce polymère à blocs polyamides et blocs polyéther peut comprendre plusieurs types de blocs polyamides et/ou plusieurs types de blocs polyéther dans la même chaîne.

De préférence, le polymère à blocs polyamides et blocs polyéther comprend un seul type de bloc polyamide et un seul type de blocs polyéther. On utilise avantageusement des polymères à blocs PA-12 et blocs PTMG et des polymères à blocs PA-6 et blocs PTMG.

On peut aussi utiliser un mélange de ces deux polymères à blocs polyamides et blocs polyéther.

Selon une autre forme de l'invention, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 1/1 à 4/1.

Avantageusement, (A) est choisi parmi les polyamides, les copolymères à blocs polyamide et blocs polyéther, les polyuréthannes élastomères ou les polyétheresters.

De préférence, (A) est un Polyamide-6, un polyamide 11, un polyamide 12, un polymère à blocs PA-6 et blocs PTMG ou un polymère à blocs PA-12 et blocs PTMG.

Les blocs polyéthylène glycol (ou polyoxyéthylène glycol, PEG),

HO $\{C_2H_4-O\}_n$-H du polymère (B) peuvent avoir une masse $\overline{M}n$ entre 200 et 6 000.

Le polymère (B) peut être par exemple :

- un polyuréthane élastomère dont le polyol (1) est le polyéthylène glycol.
- un polyétherester dont le polyétherdiol (2) est le polyéthylène glycol.
- un polymère à blocs polyamides et blocs polyéther dont le polyéther est le polyéthylène glycol.

Avantageusement, le polymère (B) est un polymère à blocs polyamides et blocs polyéthylène glycol. De préférence, les blocs polyamide sont en PA-6 ou en PA-12.

Selon une autre forme de l'invention, le polymère (A) peut contenir dans sa chaîne des blocs PEG en plus d'autres blocs polyéther. Si la quantité de PEG est suffisante, la présence de (B) n'est plus nécessaire.

On considère que les courroies de l'invention sont antistatiques quand le temps de 1/2 de charge est inférieur à 3 secondes, avantageusement inférieur à 1 seconde et de préférence compris entre 0,2 et 0,7 secondes.

Le temps de 1/2 décharge se mesure comme suit :

on met un échantillon sur un plateau tournant relié à la terre. Une électrode est disposée sans contact au-dessus de l'échantillon, elle est portée à 10 KVolts. Ceci entraîne une ionisation de l'air et un dépôt de charges sur l'échantillon.

Diamétralement opposée une autre électrode mesure le potentiel de surface. Quand le potentiel de surface atteint un palier, ceci signifie qu'il s'écoule autant de charges qu'on en dépose. On arrête la charge puis on mesure le temps au bout duquel le potentiel de surface a baissé jusqu'à la moitié du palier. Ce temps est appelé temps de demi décharge.

On utilise aussi un autre test : une courroie de l'invention ou une plaque ou un barreau réalisé dans le matériau des courroies de l'invention est frotté longuement avec un chiffon en laine. Il n'attire pas la cendre de cigarette alors que le polymère (A) seul attire cette cendre.

La demanderesse a découvert que ces tests correspondaient à un comportement antistatique alors que la mesure traditionnelle de la résistivité de surface qui chute d'un facteur 100 à 1 000 entre les polymères (A) et les compositions de l'invention comprenant les polymères (A) et (B), reste à des valeurs élevées.

La quantité de (B) dépend de sa teneur en PEG et de l'effet antistatique recherché. L'antistatisme augmente avec la quantité de (B) et la quantité de PEG. La quantité de (B) peut être de 10 à 40 % en poids de (A) + (B).

On peut fabriquer ces mélanges de (A) et (B) selon les techniques usuelles de mélange des thermoplastiques à l'état fondu (bi-vis, BUSS, monovis).

Le mélange de (A) et (B) peut comprendre aussi des anti oxydants, des anti-UV, des charges, etc...

L'avantage des courroies de l'invention est leur anti statisme permanent, il n'y a pas migration de (B). Si (A) et (B) sont des polymères à blocs polyamide et blocs polyéther et si les blocs PA de (A) et (B) sont de même type, le mélange de (A) et (B) est transparent. Les courroies de l'invention ne sont pas tâchantes et ne sont pas grasses. Un autre avantage est que les courroies de l'invention peuvent être lavées ou essuyées sans risque d'enlever le produit apportant l'antistatisme à la différence des antistatiques ordinaires qui exsudent provoquant une baisse de l'antistatisme.

Avantageusement, les courroies de l'invention sont telles que (A) est un polymère à blocs PA-12 ou PA-6 et blocs PTMG et (B) est un polymère à blocs PA-6 et blocs PEG ou à blocs PA-12 et blocs PEG ou leur mélange, de préférence les courroies sont telles que (A) est à blocs PA-6 et blocs PTMG et (B) est à blocs PA-6 et blocs PEG ou telles que (A) est à blocs PA-12 et blocs PTMG et (B) est à blocs PA-12 et blocs PEG.

L'invention concerne aussi des courroies comprenant une âme en un matériau (C) entre deux couches du mélange de (A) et (B) anti statique décrit ci-dessus.

Le matériau (C) peut être défini comme tout matériau possédant les propriétés mécaniques suffisantes pour en faire une courroie aussi bien du type courroie de transmission de puissance que bande transporteuse. Avantageusement, (C) est en polymère (A).

Ces courroies peuvent être produites par coextrusion. On peut éventuellement disposer entre l'âme (C) et chaque couche anti statique une colle ou un liant de coextrusion. On peut aussi déposer par extrusion les deux couches anti statiques sur l'âme (C), ou laminer toutes ces couches ou toute combinaison de ces possibilités. La colle peut être un hot melt.

A titre d'exemple de liant, on peut citer :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

- les polymères à blocs polyamides et blocs polyéthers.

Avantageusement, on utilise des structures ne nécessitant ni colle ni liant. A titre d'exemples, on peut citer :

- (A) et (C) en polyéther ester
- (A) et (C) en polyamide
- (C) en polyamide et (A) en polymère à blocs polyamide et blocs polyéthers.
- (C) et (A) en polymère à blocs polyamide et blocs polyéthers.
- (C) et (A) en polyuréthane élastomère.
- (C) en polyuréthane élastomère et (A) en polymère à blocs polyamide et blocs polyéther ou vice versa.

On préfère la structure telle que :

(C) est un polymère à blocs PA-12 et blocs PTMG ou un polyamide-12.
(A) est un polymère à blocs PA-12 et blocs PTMG
(B) est un polymère à blocs PA-6 et blocs PEG ou un polymère à blocs PA-12 et blocs PEG ou leur mélange.

Selon une autre forme de l'invention, l'âme (C) est complètement recouverte du mélange de (A) et (B) anti statique, c'est-à-dire que dans une vue en coupe de la courroie, l'âme est complètement entourée du mélange anti statique de (A) et (B).

## Exemples

Dans les exemples suivants, on désigne par :

PEBAX 1 : un polymère (A) ayant des blocs en PA-12 et des blocs PTMG respectivement de masses $\overline{Mn}$ 2000 et $\overline{Mn}$ 2000; le MFi (melt flow index) selon ASTM D12 38 est 5 (235° C 1 kg), la température de fusion 168° C et la dureté 40 shore D.

PEBAX 2 : un polymère (B) ayant des blocs en PA-12 et des blocs PEG respectivement de masses $\overline{Mn}$ 1500 et $\overline{Mn}$ 1500 ; la température de fusion est 158° C et la dureté 40 shore D.

PEBAX 3: un polymère (B) ayant des blocs en PA-6 et des blocs PEG respectivement de masses $\overline{Mn}$ 1500 et $\overline{Mn}$ 1500 ; la température de fusion est 204° C et la dureté 40 shore D.

On a réalisé par compoundage les compositions figurant dans le tableau 1.

On les met sous forme de barreaux de films et des plaques pour en mesurer les propriétés. On a réalisé ensuite des courroies plates largeur 20 cm épaisseur 0,9 cm dans le matériau des exemples 4 et 7.

On a mesuré les propriétés en traction de plaques sur des éprouvettes de type IFC (Institut Français du caoutchouc).

Les résultats figurent dans le tableau 2. (dans lequel s = désigne l'écart-type).

Tableau 1

| Exemples | 1 | 2 | 3 | 4 | 5 | 6 | 7 |
|---|---|---|---|---|---|---|---|
| Pebax 1 Polymère (A) | 100 | 90 | 80 | 60 | 90 | 80 | 60 |
| Pebax 2 Polymère (B) | | 10 | 20 | 40 | | | |
| Pebax 3 Polymère (B) | | | | | 10 | 20 | 40 |
| Σ (parties en poids) | 100 | 100 | 100 | 100 | 100 | 100 | 100 |

## Tableau 2

Traction sur éprouvettes I.F.C. découpées dans des films sens // extr.

| Exemples | UNITE | 1 | 2 | 4 | 5 | 6 | 7 |
|---|---|---|---|---|---|---|---|
| **TRACTION** | | | | | | | |
| Contrainte à 5 % | MPa | 3.95  s = 0.16 | 4.37  s = 0.32 | 4.67  s = 0.16 | 3.81  s = 0.17 | 4.05  s = 0.09 | 3.77  s = 0.34 |
| Contrainte à 10 % | MPa | 5.84  s = 0.03 | 6.07  s = 0.18 | 6.25  s = 0.06 | 5.53  s = 0.06 | 5.79  s = 0.11 | 5.43  s = 0.20 |
| Contrainte à 15 % | MPa | 6.93  s = 0.03 | 7.09  s = 0,16 | 7.23  s = 0.08 | 6.59  s = 0.02 | 6.83  s = 0.12 | 6.43  s = 0.18 |
| Contrainte à 25 % | MPa | 8.04  s = 0.01 | 8.27  s = 0.22 | 8.51  s = 0.09 | 7.75  s = 0.01 | 8.06  s = 0.14 | 7.68  s = 0.14 |
| Contrainte à 50 % | MPa | 9.11  s = 0.05 | 9.35  s = 0.30 | 9.75  s = 0.13 | 8.78  s = 0.04 | 9.21  s = 0.15 | 8.89  s = 0.10 |
| Contrainte à 100 % | MPa | 9.92  s = 0.05 | 10.10  s = 0.34 | 10.55  s = 0.13 | 9.56  s = 0.09 | 10.07  s = 0.18 | 9.69  s = 0.12 |
| Contrainte à 200 % | MPa | 11.94  s = 0.07 | 11.91  s = 0.29 | 12.22  s = 0.20 | 11.37  s = 0.06 | 11.97  s = 0.24 | 11.24  s = 0.09 |
| Contrainte à 300 % | MPa | 14.62  s = 0.13 | 14.37  s = 0.20 | 14.49  s = 0.27 | 13.92  s = 0.03 | 14.37  s = 0.36 | 13.56  s = 0.14 |
| Contrainte à la rupture | MPa | 46.4  s = 0.5 | 42.7  s = 3.3 | 40.9  s = 1.2 | 37.0  s = 2.4 | 34.7  s = 2.4 | 29.3 s = 2.2 |
| Allongement à la rupture | % | 814  s = 7 | 798  s = 12 | 834  s = 8 | 731  s = 28 | 757  s = 3 | 703  s = 46 |

EP 0 780 594 A1

On a mesuré les temps de 1/2 décharge et la résistivité de surface, les échantillons ayant été conservés 15 jours dans une atmosphère à 230° C à 50 % d'humidité relative (50 % RH).

On a aussi refait les mesures 2 mois après pour voir l'influence de l'humidité. Ces résultats sont dans le tableau 3.

TABLEAU 3

| Exemples | Temps de 1/2 de charge (sec.) | | Résistivité de surface ($\Omega$) ASTM D 257 | |
|---|---|---|---|---|
| | Initial | + 2 mois | Initial | + 2 mois |
| 1 | 3.5 | 2,3 | 3.8 E + 14 | 9,5 E + 13 |
| 2 | 0.5 | 0.6 | 2.7 E + 12 | 2,5 E + 12 |
| 3 | 0.7 | | 1.4 E + 12 | |
| 4 | 0.2 | 0.3 | 6.3 E + 11 | 3,8 E + 11 |
| 5 | 0.5 | 0.7 | 4.5 E + 12 | 9,7 E + 12 |
| 6 | 0.5 | 0.5 | 1.3 E + 12 | 4,1 E + 12 |
| 7 | 0.6 | 0.4 | 2.3 E + 11 | |

On a aussi observé que les échantillons 2 à 7 frottés avec un tissu en laine n'attirent pas la cendre de cigarette alors que l'échantillon 1 dans les mêmes conditions l'attire.

**Revendications**

1. Courroies en polymères thermoplastique (A) et comprenant une quantité suffisante d'un polymère (B) pour les rendre antistatiques, ledit polymère (B) comprenant des blocs polyéthylène glycol.

2. Courroies selon la revendication 1 dans lesquelles (A) est choisi parmi les polyamides, les polymères à blocs polyamides et blocs polyéther, les polyuréthanes élastomères et les polyétheresters.

3. Courroies selon la revendication 2 dans lesquelles (A) est choisi parmi le polyamide-6, le polyamide-11, le polyamide-12, les polymères à blocs PA-6 et blocs polytétraméthylène glycol et les polymères à blocs PA-12 et blocs polytétraméthylène glycol.

4. Courroies selon l'une quelconque des revendications précédentes dans lesquelles le polymère (B) est choisi parmi les polyuréthanes élastomères dont le polyol des segments souples est le polyéthylène glycol, les polyétheresters dont le polyol des segments souples est le polyéthylène glycol et les polymères à blocs polyamides et blocs polyéthylène glycol.

5. Courroies selon la revendication 4 dans laquelle (B) est avantageusement choisi parmi les polymères à blocs polyamide et blocs polyéthylène glycol, les blocs polyamide étant de préférence en PA-6 ou en PA-12.

6. Courroies selon l'une quelconque des revendications précédentes dans lesquelles (B) représente 10 à 40 % en poids de (A) + (B).

7. Courroies selon quelconque des revendications précédentes comprenant une âme en un matériau (C) entre deux couches du mélange antistatique de (A) et (B).

8. Courroies selon l'une quelconque des revendications précédentes utilisées soit comme courroies de transmission de puissance soit comme bandes transporteuses.

# EP 0 780 594 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DATABASE WPI<br>Section Ch, Week 8817<br>Derwent Publications Ltd., London, GB;<br>Class A23, AN 88-116667<br>XP002029078<br>& JP 63 063 748 A (TOYO PLASTIC SEIKO) ,<br>22 Mars 1988<br>* abrégé * | 1-6,8 | F16G1/00 |
| A | DATABASE WPI<br>Section Ch, Week 9313<br>Derwent Publications Ltd., London, GB;<br>Class A25, AN 93-104820<br>XP002029079<br>& JP 05 044 784 A (NITTA KK) , 23 Février<br>1993<br>* abrégé * | 2,4 | |
| A | PATENT ABSTRACTS OF JAPAN<br>vol. 010, no. 331 (M-533), 11 Novembre<br>1986<br>& JP 61 136036 A  (NITTA KK), 23 Juin<br>1986,<br>* abrégé * | 7 | |
| A | PATENT ABSTRACTS OF JAPAN<br>vol. 016, no. 103 (M-1221), 13 Mars 1992<br>& JP 03 277850 A  (MITSUBOSHI BELTING<br>LTD), 9 Décembre 1991,<br>* abrégé * | 7 | **DOMAINES TECHNIQUES RECHERCHES (Int.Cl.6)**<br><br>F16G<br>C08L |
| A,D | FR 2 291 225 A (DU PONT DE NEMOURS) | | |
| A,D | EP 0 342 066 A (ATOCHEM) | | |
| A,D | EP 0 402 883 A (DU PONT DE NEMOURS) | | |
| A,D | EP 0 405 227 A (DU PONT DE NEMOURS) | | |

-/--

Le présent rapport a été établi pour toutes les revendications

| Lieu de la recherche | Date d'achèvement de la recherche | Examinateur |
|---|---|---|
| LA HAYE | 1 Avril 1997 | Baron, C |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 780 594 A1

**Office européen des brevets**

# RAPPORT DE RECHERCHE EUROPEENNE

Numero de la demande

EP 96 40 2712

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | US 4 331 786 A (FOY)<br>----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 1 Avril 1997 | Baron, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

10